# EUROPEAN PATENT APPLICATION

(11) **EP 3 373 638 A1**
(43) Date of publication of application: **12.09.2018**
(21) Application number: 16862092.0
(22) Date of filing: 02.11.2016
(51) Int. Cl.: H04W 24/10, H04W 72/04, H04W 72/14

(54) **USER TERMINAL, WIRELESS BASE STATION, AND WIRELESS COMMUNICATION METHOD**

(30) Priority: 04.11.2015 JP 2015217101
(71) Applicant: NTT DOCOMO, INC., Chiyoda-ku Tokyo 100-6150 (JP)
(72) Inventor: TAKEDA, Kazuki, Tokyo 100-6150 (JP); NAGATA, Satoshi, Tokyo 100-6150 (JP); WANG, Lihui, Beijing 100190 (CN); LIU, Liu, Beijing 100190 (CN); JIANG, Huiling, Beijing 100190 (CN)
(74) Representative: Hoffmann Eitle
(86) International application number: PCT/JP2016/082501
(87) International publication number: WO 2017/078032

(57) **Abstract**

The present invention is designed so that periodic CSI reporting can be made adequately even when the number of component carriers (CCs) that can be configured per user terminal is expanded more than in existing systems. According to the present invention, a user terminal has a receiving section that receives downlink control information including transmission command information of aperiodic channel state information, and a control section that controls transmission of the aperiodic channel state information using an uplink shared channel allocated by the downlink control information, based on the transmission command information, and, when an index included in the downlink control information is a specified value and transmission of the aperiodic channel state information is commanded by the transmission command information, the control section determines whether to transmit the aperiodic channel state information with retransmission data based on a new data identifier (NDI) included in the downlink control information.

## Description

### Technical Field

The present invention relates to a user terminal, a radio base station and a radio communication method in next-generation mobile communication systems.

### Background Art

In the UMTS (Universal Mobile Telecommunication System) network, the specifications of long term evolution (LTE) have been drafted for the purpose of further increasing high speed data rates, providing lower delays and so on (see non-patent literature 1). LTE Advanced (also referred to as LTE Rel. 10, 11 or 12) is specified for the purpose of further broadbandization and speed-up from LTE (also referred to as LTE Rel. 8), and a successor system (also referred to as LTE Rel. 13 or the like) is also under study.

The system band in LTE Rel. 10/11 includes at least one component carrier (CC), where the LTE system band of LTE Rel. 8 constitutes one unit. Such bundling of a plurality of CCs into a wide band is referred to as "carrier aggregation" (CA).

In LTE of Rel. 8 to 12, the specifications have been drafted assuming exclusive operations in frequency bands that are licensed to operators -- that is, licensed bands. For licensed bands, for example, 800 MHz, 2 GHz and/or 1.7 GHz have been in use.

In LTE of Rel. 13 and later versions, operation in frequency bands where license is not required -- that is, unlicensed bands -- is also a target of study. For unlicensed band, for example, 2.4 GHz, which is the same as in Wi-Fi, or the 5 GHz band and/or the like may be used. Although carrier aggregation (LAA: license-assisted access) between licensed bands and unlicensed bands is placed under study in Rel. 13 LTE, there is a possibility that, in the future, dual connectivity and unlicensed-band stand-alone will becomes targets of study as well.

### Citation List

### Non-Patent Literature

Non-Patent Literature 1: 3GPP TS 36.300 Rel.8 "Evolved Universal Terrestrial Radio Access (E-UTRA) and Evolved Universal Terrestrial Radio Access Network (E-UTRAN); Overall description; Stage 2"

### Summary of Invention

### Technical Problem

In the carrier aggregation (CA) of LTE Rel. 10-12, the number of component carriers (CCs) that can be configured per user terminal is limited to maximum five. In CA in and after LTE Rel. 13, a study is in progress to expand the number of CCs that can be configured per user terminal to six or more in order to realize further band expansion.

By the way, in existing systems (Rel. 10-12), aperiodic CSI reporting in which the user terminal transmits channel state information (CSI) in response to transmission command from the radio base station is supported.

However, aperiodic CSI reporting of existing systems is based on the premise that the number of CCs that can be configured for user terminals is 5 or less. Therefore, when the number of CCs that can be configured in the user terminal is expanded to six or more, if the method of existing systems is used as it is, aperiodic CSI reporting may not be performed properly.

The present invention has been made in view of the above points, and it is therefore an object of the present invention to provide a user terminal, a radio base station and a radio communication method that can implement adequate periodic CSI reporting when the number of component carriers (CCs) that can be configured per user terminal is expanded more than in existing systems.

### Solution to Problem

According to one aspect of the present invention, a user terminal has a receiving section that receives downlink control information including transmission command information of aperiodic channel state information, and a control section that controls transmission of the aperiodic channel state information using an uplink shared channel allocated by the downlink control information, based on the transmission command information, and, when an index included in the downlink control information is a specified value and transmission of the aperiodic channel state information is commanded by the transmission command information, the control section determines whether to transmit the aperiodic channel state information with retransmission data based on a new data identifier (NDI) included in the downlink control information.

### Advantageous Effects of Invention

According to the present invention, periodic CSI reporting that is suitable for use when the number of component carriers (CCs) that can be configured per user terminal is expanded more than in existing systems can be implemented.

### Brief Description of Drawings

FIG. 1 is a diagram to explain carrier aggregation;
FIGs. 2A and 2B are diagrams showing examples of 2-bit A-CSI triggers;
FIG. 3 is an example of a table for associating MCS indices, modulation orders, TBS indices and redundancy versions;
FIG. 4 is a diagram to show an example of the operation of the Rel. 8 user terminal;
FIG. 5 is a diagram to show an example of the operation of the user terminal according to the first example;
FIG. 6 is a diagram to show an example of the operation of the user terminal according to the second example;
FIG. 7 is a diagram to show another example of the operation of the user terminal according to the second example;
FIG. 8 is a diagram to show an example of a schematic structure of a radio communication system according to an embodiment of the present invention;
FIG. 9 is a diagram to show an example of an overall structure of a radio base station according to the present embodiment;
FIG. 10 is a diagram to show an example of a functional structure of a radio base station according to the present embodiment;
FIG. 11 is a diagram to show an example of an overall structure of a user terminal according to the present embodiment;
FIG. 12 is a diagram to show an example of a functional structure of a user terminal according to the present embodiment; and
FIG. 13 is a diagram to show an example hardware structure of a radio base station and a user terminal according to the present embodiment.

### Description of Embodiments

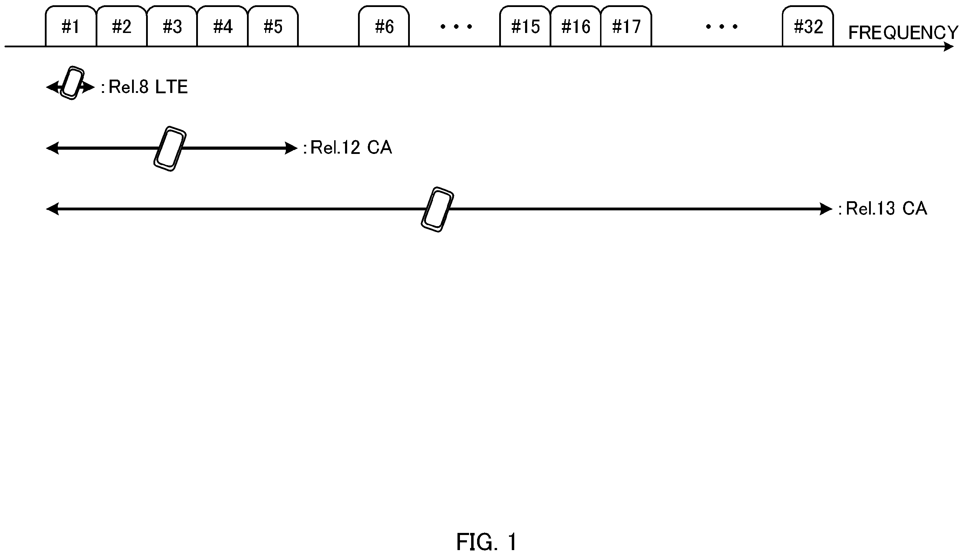

FIG. 1 is a diagram to explain carrier aggregation (CA). As shown in FIG. 1, in CA of up to LTE Rel. 12, maximum five component carriers (CCs) (CC #1 to CC #5) are bundled, where the system band of LTE Rel. 8 constitutes one unit. That is, in carrier aggregation up to LTE Rel. 12, the number of CCs that can be configured in a user terminal (UE: User Equipment) is limited to maximum five (one primary cell and maximum four secondary cells).

Meanwhile, in carrier aggregation of LTE Rel. 13, a study is in progress to further expand the band by bundling six or more CCs (cells). That is, in CA of LTE Rel. 13, expansion of the number of CCs that can be configured per user terminal to six or more (CA enhancement) is being studied. For example, as shown in FIG. 1, when 32 CCs (CC #1 to CC #32) are bundled, a bandwidth of maximum 640 MHz can be secured.

In this way, more flexible and faster radio communication is expected to be made possible by increasing the number of CCs that can be configured in a user terminal. Also, expanding the number of CCs like this is an effective way to widen the band based on CA (LAA: License-Assisted Access) between licensed bands and unlicensed bands. For example, five licensed band CCs (= 100 MHz) and fifteen unlicensed band CCs (= 300 MHz) are bundled, and a bandwidth of 400 MHz can be secured.

In the unlicensed band, listening will be conducted for coexistence with other systems such as LTE (LBT: Listen Before Talk) and Wi-Fi (registered trademark) by other operators. Therefore, an unlicensed band cell (CC) can also be said to be a cell to which listening is applied.

Meanwhile, in existing systems (for example, LTE Rel. 12), aperiodic CSI reporting, in which a user terminal transmits channel state information (CSI) in response to a transmission command from a radio base station, is supported. Information on this transmission command (hereinafter referred to as "transmission command information" or "A-CSI trigger") is included in downlink control information (DCI) transmitted on the downlink control channel (PDCCH: Physical Downlink Control Channel or EPDCCH: Enhanced Physical Downlink Control Channel).

DCI including A-CSI triggers may be used for scheduling on the uplink shared channel (PUSCH: Physical Uplink Shared Channel), and also referred to as "DCI format 0" is used to determine whether or "DCI format 4," is used to determine whether "uplink scheduling grants" and so on (hereinafter "UL grant").

In aperiodic CSI reporting (A-CSI), the user terminal transmits CSI, using the PUSCH designated by the UL grant, according to the A-CSI trigger included in the UL grant. CSI transmitted according to A-CSI triggers may be referred to as "aperiodic CSI" (A-CSI) or the like. In addition, P-CSI includes at least one of a channel quality indicator (CQI), a precoding matrix indicator (PMI), and a rank indicator (RI).

In aperiodic CSI reporting, the A-CSI trigger included in the UL grant can be composed of 1 bit or 2 bits. For example, one-bit A-CSI triggers can be transmitted using DCI format 0, and 2-bit A-CSI triggers can be transmitted using DCI format 4. The A-CSI trigger may be referred to as "CSI request field" or the like.

1-bit A-CSI triggers command whether or not transmit CSI. For example, when the value of the A-CSI trigger is "0," is used to determine whether it is commanded not to transmit CSI, and, when this value is "1," is used to determine whether it is commanded to transmit the CSI of the serving cell transmitting the PUSCH. On the other hand, when 2-bit A-CSI triggers are used, in addition to commands as to whether or not to transmit CSI, a command is given as to which serving cell's (or CSI process's) CSI should be transmitted. In the carrier aggregation of LTE Rel. 10-12, 2-bit A-CSI triggers are supported.

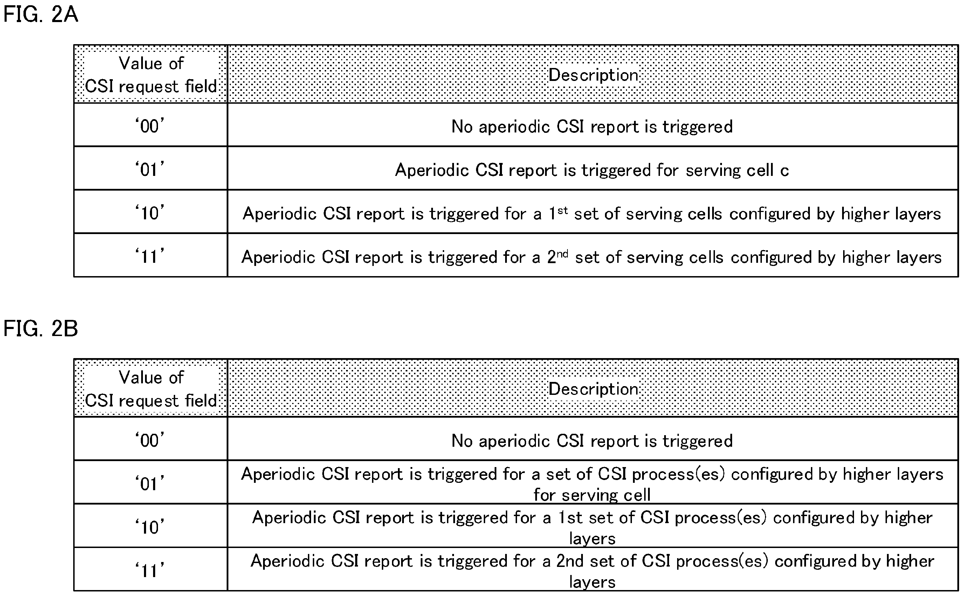

FIG. 2 is an explanatory diagram of an example of 2-bit A-CSI triggers. For example, in FIG. 2A, when the value of the A-CSI trigger (CSI request field) is "00," is used to determine whether it is commanded not to transmit CSI, and, when the value is "01," is used to determine whether it is commanded to transmit the CSI of the serving cell (CC, cell, etc.) transmitting the PUSCH. In addition, the values "10" and "11" respectively command to transmit the CSI of the first and second serving cell sets, configured by higher layer.

On the other hand, in FIG. 2B, when the value of the A-CSI trigger is "01," is used to determine whether it is commanded to transmit CSI of at least one CSI process configured by higher layer. In addition, when the values are "10" and "11," is used to determine whether it is commanded to transmit the CSI of the first and second CSI process sets, configured by higher layer, respectively.

The CSI processes of FIG. 2B are associated with non-zero power CSI-RS resources (CSI-RS resources) and zero power CSI-RS resources (CSI-interference measurement (IM) resources). In the case where transmission mode 10 is set for the user terminal (for example, in the case of coordinated multi-point (CoMP) communication), one or more CSI processes are set per serving cell). Note that which table in FIGs. 2A and 2B should be used can be configured by higher layer signaling.

In existing systems, the user terminal controls the transmission of the PUSCH using a modulation scheme (or modulation order) or a redundancy version determined based on a predetermined index included in the UL grant. The index is, for example, an index set in the modulation and coding scheme (MCS) and redundancy version field. This index is also referred to as MCS index (I_{MCS}, I_MCS) and so on.

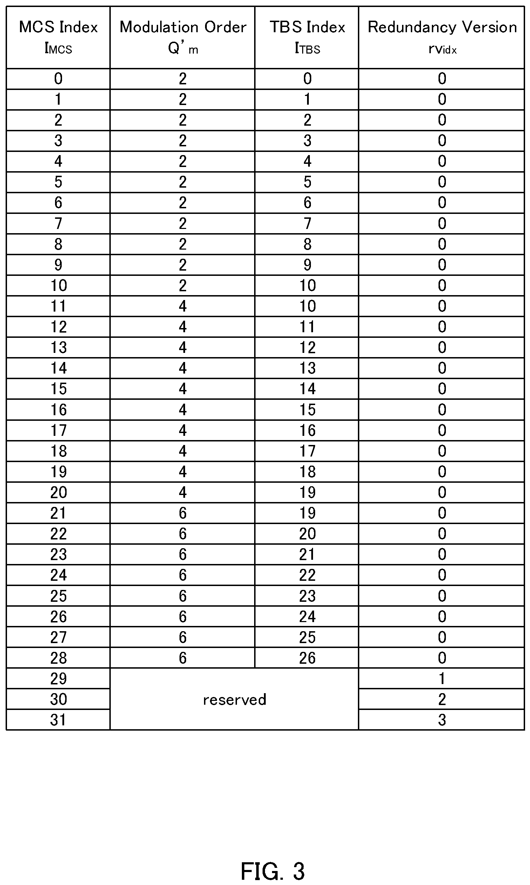

FIG. 3 is a diagram to show examples of MCS indices. As shown in FIG. 3, when the MCS index is 0 to 28 (0 ≦ IMCS ≦ 28), the user terminal controls uplink transmission by PUSCH (including initial or retransmission) using modulation scheme and/or redundancy version of modulation order associated with the MCS index.

Also, in existing systems, when the MCS index is "29," the user terminal determines whether or not to multiplex the A-CSI and the retransmission data of uplink data (UL-SCH: Uplink Shared CHannel) on the PUSCH, based on the number of physical resource blocks (PRBs) allocated to the PUSCH.

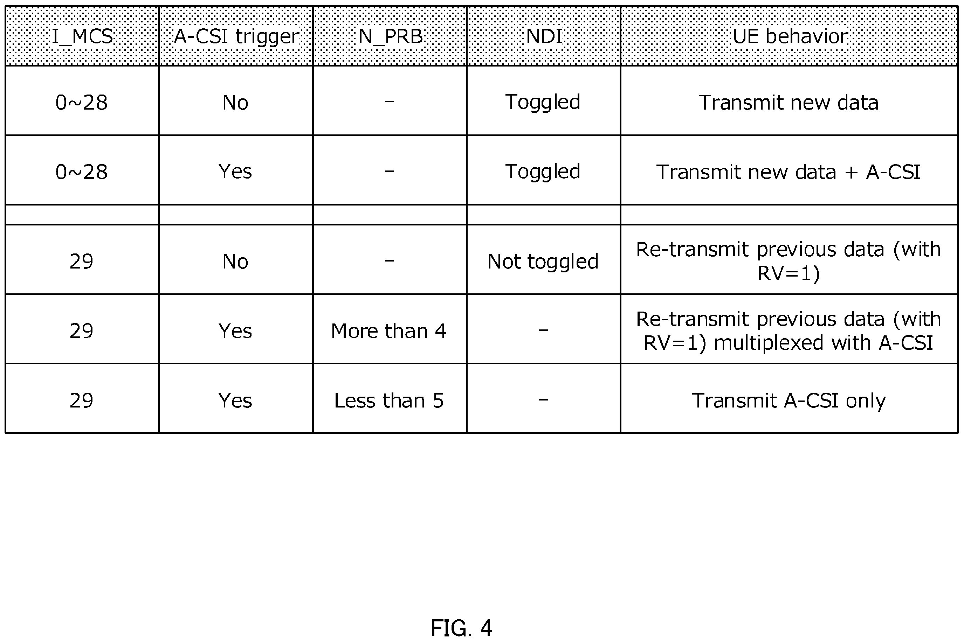

FIG. 4 is a diagram to show an example of the operation of the user terminal of Rel. 8 using the MCS index. As shown in FIG. 4, the user terminal determines which of new data and retransmission data to transmit on the PUSCH based on the new data indicator (NDI) included in the UL grant. NDI is an indicator showing new data, and, when NDI is set to on (toggled), new data is transmitted, and retransmission data is transmitted for NDI to be turned off (not toggled).

For example, when the MCS index (I_MCS) is "0" to "28," is used to determine whether transmission of A-CSI is not commanded by A-CSI trigger and the NDI is set to on (toggled), the user terminal transmits new data on the PUSCH. On the other hand, when the MCS index (I_MCS) is "0" to "28," is used to determine whether transmission of A-CSI is commanded by an A-CSI trigger, and the NDI is set to on (toggled), the user terminal transmits new data and the A-CSI on the PUSCH.

Also, when the MCS index (I_MCS) is "29," is used to determine whether transmission of A-CSI is not commanded by A-CSI trigger and NDI is set to off (not toggled), the user terminal transmits retransmission data by applying the redundancy version "1" associated with the MCS index "29."

Also, when the MCS index (I_MCS) is "29" and transmission of A-CSI is commanded by an A-CSI trigger, based on the number of PRBs allocated to the PUSCH (N_PRB), the user terminal multiplexes the A-CSI and retransmission data and decides whether or not to transmit using the PUSCH. In this case, A-CSI and retransmission data are multiplexed regardless of NDI.

To be more specific, when the A-CSI trigger is one bit and transmission of A-CSI is commanded, when the A-CSI trigger is two bits and the transmission of the A-CSI of a single serving cell is commanded, or when the A-CSI trigger is two bits and transmission of A-CSI of a single CSI process is commanded, as shown in FIG. 4, when the number of PRBs is larger than 4 (5 or more), the user terminal transmits A-CSI and retransmission data in a multiplexed manner, and, when the number of PRBs is smaller than 5 (4 or less), the user terminal transmits A-CSI alone (without multiplexing with retransmission data).

Alternatively, when the A-CSI trigger is two bits and transmission of A-CSI of one or more serving cells is commanded, when the A-CSI trigger is two bits and transmission of A-CSI of one or more CSI processes is commanded, or when the number of PRBs is larger than 20 (21 or more), the user terminal transmits A-CSI and retransmission data by multiplexing, and, when the number of PRBs is smaller than 21 (less than 20), the user terminal transmits A-CSI alone (without multiplexing with retransmitted data).

As described above, in existing systems, whether or not to multiplex A-CSI and retransmission data is determined by the number of PRBs allocated to the PUSCH (N_PRB). This is because when the number of PRBs allocated to the PUSCH is equal to or less than a predetermined value (this predetermined value is, for example, "4" when A-CSI of a single serving cell or CSI process is transmitted, or "20" if A-CSI of one or more serving cells (or CSI processes) is transmitted), it is considered that the number of PRBs is not enough to multiplex and transmit A-CSI and retransmission data.

In existing systems, in the UL grant to command the user terminal to retransmit the PUSCH, the radio base station controls whether the number of PRBs to be allocated to the retransmission PUSCH is to be "4" or to be larger or smaller than "20," so that the radio base station can control whether the user terminal transmits A-CSI alone or multiplexes and transmits A-CSI with retransmission data. For example, in a subframe or the like in which resources of random access preamble are set, it may be difficult to allocate a large number of PRBs. In this case, by setting the number of PRBs to "4" or "20" or less, it is possible to transmit only A-CSI by omitting retransmission data, so that resource allocation becomes easier. In this case, since retransmission data of the PUSCH is not transmitted, when it is necessary to retransmit data, it is necessary to assign retransmission at the next timing. On the other hand, when a large number of PRBs can be allocated, by setting the number of PRBs to be larger than "4" or "20," is used to determine whether A-CSI and retransmission data can be multiplexed, so that it is possible to reduce the delay.

On the other hand, when the number of CCs that can be configured in the user terminal is expanded to six or more (for example, 32), as in existing systems, if an attempt to determine whether or not to multiplex A-CSI and retransmission data based on the limitation of the number of PRBs described above is made, it may not possible to properly perform aperiodic CSI reporting.

To be more specific, in existing systems, when transmission of A-CSI of one or more serving cells (or CSI processes) is commanded, if the number of PRBs allocated to the PUSCH is "20" or less, A-CSI is transmitted without being multiplexed with retransmission data. However, if the number of PRBs is less than or equal to "20," is used to determine whether there is a possibility that the number of PRBs is insufficient to transmit A-CSI of six or more (for example, up to 32) serving cells (or CSI processes).

It is also conceivable to increase the threshold value of the number of PRBs (for example, to "100" or "160) in preparation for transmission of A-CSI for six or more (for example, up to 32) serving cells (or CSI process). However, when the radio base station attempts to transmit A-CSI and retransmission data to the user terminal, more PRBs than the above threshold need to be allocated to the PUSCH, and therefore there is a possibility that the opportunities to transmit retransmission data with A-CSI are reduced.

Even when six or more CCs are configured, transmission of A-CSI of the maximum number of (for example, 32) serving cells (or CSI process) is not always commanded. Even if the number of serving cells (or CSI processes) where transmission of A-CSI is commanded is six or more, the number may be a relatively small (for example, 8) in some cases. In such cases, it is desirable to multiplex retransmission data with a relatively small number of A-CSI and effectively utilize the payload of the PUSCH.

On the other hand, as described above, when only the threshold (for example, "100" or "160") assuming transmission of the maximum number (for example, 32) of A-CSI is used as the threshold for the number of PRBs described above, when the number of A-CSI to be transmitted is relatively small, the number of PRBs used for the PUSCH also decreases, and therefore it may not be possible to transmit retransmission data with this A-CSI.

Therefore, assuming the case where the number of CCs that can be configured in the user terminal is expanded to six or more (for example, 32), the present inventors have come up with the idea of judging whether or not to transmit A-CSI together with retransmission data based on conditions that are different from the number of PRBs descried above, and thereupon arrived at the present invention.

Now, embodiments of the present invention will be described the following in detail. Although examples will be shown in the following description where the number of CCs that can be configured per user terminal in CA is 32, this is not limiting. In the following description, a case where an MCS index is used as an index to be reported to a user terminal will be described, but the present embodiment is not limited to this. It is also possible to use an index different from the MCS index.

In the following description, when the MCS index is a specified value (for example, "29"), the user terminal performs a specific operation, but the specified value is not limited to "29." In the following description, the case of using A-CSI triggers (CSI request field) as aperiodic CSI (A-CSI) transmission command information will be described, but the present embodiment is not limited to this. Also, A-CSI triggers may be 1 or 2 bits, or may be 3 bits or more as described above.

### (First Example)

In a first example, a case will be described in which whether to transmit A-CSI together with retransmission data is determined based on existing information items (IE) included in the UL grant. In the following, a case where the new data indicator (NDI) is used as an existing IE will be described, but it is also possible to use an existing IE other than NDI.

In the first example, the user terminal receives a UL grant (DCI) including an A-CSI trigger (transmission command information), and, based on the A-CSI trigger, the user terminal controls the transmission of A-CSI using the PUSCH allocated by the UL grant. Further, the user terminal determines whether or not to transmit (multiplex) A-CSI together with retransmission data based on the NDI included in the UL grant.

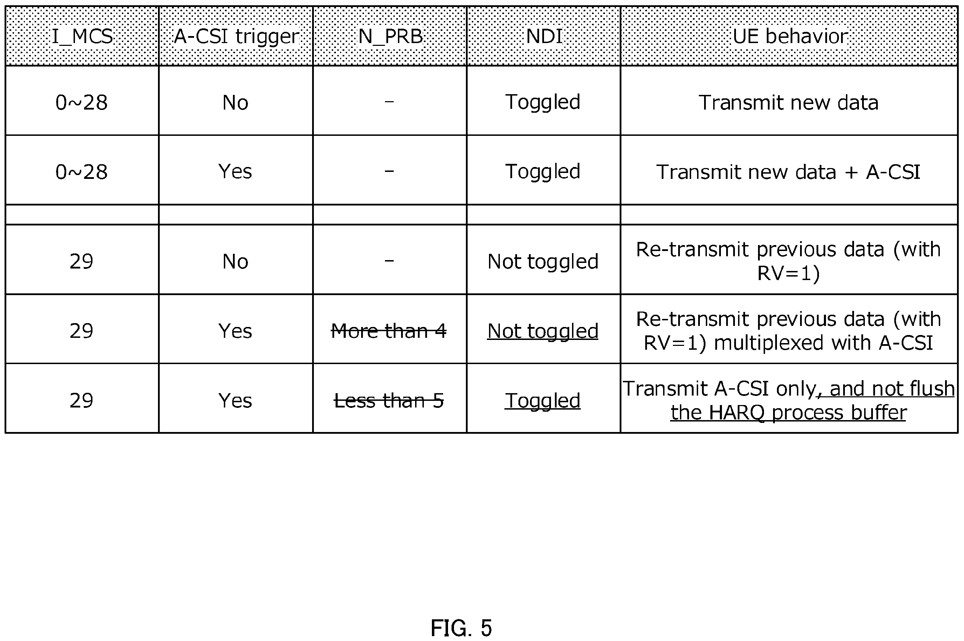

FIG. 5 is a diagram to show an example of the operation of the user terminal using the NDI according to the first example. In FIG. 5, since the operation of the user terminal when the MCS index (I_MCS) is "0" to "28" is the same as in FIG. 4, the description will be omitted.

As shown in FIG. 5, when the MCS index (I_MCS) is "29" and transmission of A-CSI is commanded by an A-CSI trigger, the user terminal determines whether or not to transmit A-CSI together with retransmission data based on the NDI instead of the number of PRBs allocated to the PUSCH (N_PRB).

To be more specific, when the MCS index (I_MCS) is "29," is used to determine whether transmission of A-CSI is commanded by an A-CSI trigger, and NDI is not set to on (not toggled), the user terminal transmits (multiplexes) A-CSI with the retransmission data. In this case, the user terminal applies the redundancy version "1" associated with the MCS index in FIG. 3 to the retransmission data.

On the other hand, when the MCS index (I_MCS) is "29," is used to determine whether transmission of A-CSI is commanded by an A-CSI trigger and the NDI is set to on (toggled), the user terminal transmits A-CSI without multiplexing with retransmission data. In this case, the user terminal maintains the HARQ (Hybrid Automatic Repeat-reQuest) process buffer for retransmission data (without flushing).

Also, when the MCS index (I_MCS) is "29" and transmission of A-CSI is not commanded by the A-CSI trigger, the user terminal may decide whether to transmit new data or retransmission data based on the NDI.

In this way, when the MCS index (I_MCS) is "29," NDI has a different meaning depending on whether or not A-CSI transmission is commanded by an A-CSI trigger. That is, when transmission of A-CSI is commanded, the NDI is used to decide whether or not to transmit A-CSI together with retransmission data, and, when transmission of A-CSI is not commanded, the NDI is used to decide whether to transmit new data or retransmission data.

When the MCS index (I_MCS) is "0" is used to determine whether to "28," is used to determine whether regardless of whether the A-CSI trigger commands transmission of A-CSI or not, the NDI may be used to decide whether to transmit new data or retransmission data.

Also, in the first example, the A-CSI trigger may be any of 1 to 3 bits, or may be 4 bits or more. Also, the number of A-CSI serving cells (or CSI processes) pointed by the A-CSI trigger may be 1, or may be more than 1.

Also, the radio base station in existing systems (Rel. 8 to 12) does not know that the user terminal uses the NDI for determining whether or not to transmit retransmission data with A-CSI. Therefore, only when connecting to a radio base station that supports CA (Rel. 13 CA) capable of configuring six or more CCs, it is desirable for the user terminal to perform the operation of the first example.

Therefore, when six or more CCs are configured for the user terminal (Rel. 13 CA), if a 3-bit A-CSI trigger (CSI request field) is configured for the user terminal, or if the PUSCH is scheduled for the user terminal by the UL grant including a 3-bit A-CSI trigger, the operation of the first example may be applied.

In the above first mode, it is determined based on the NDI whether to multiplex and transmit A-CSI with retransmission data, so that it is possible to prevent multiplexing of retransmitted data from being restricted by the number of PRBs allocated to the PUSCH (N_PRB). Further, existing NDI is included in the UL grant and re-used to make the above decision, so that there is no need to add a new indicator when making the above decision, and therefore the overhead can be reduced.

Also, when making the above decision based on NDI, unlike the case where the decision is made based on the number of PRBs (N_PRB), it is not necessary to make a decision based on the number of bits of the A-CSI trigger or to make a decision based on a plurality of thresholds (for example, "4," "20," etc.) according to the number of A-CSI serving cells (or CSI processes). Therefore, it is possible to simplify the judgment condition that is used to determine whether to multiplex and transmit A-CSI with retransmission data, compared with the case of judging based on the number of PRBs (N_PRB).

As described above, when the MCS index (I_MCS) is "29," is used to determine whether transmission of A-CSI is commanded by an A-CSI trigger and the NDI is set to on (toggled), the user terminal transmits the A-CSI without multiplexing the retransmission data, and, furthermore, the user terminal maintains (without flushing) the HARQ process buffer for retransmission data corresponding to the PUSCH, and, as a result of this, even after A-CSI alone is transmitted, the HARQ retransmission/combining effect by the HARQ process can be retained.

Thus, even if the NDI is on, the operation of not flushing the HARQ process buffer may be applied either when CA of six or more CCs is configured, when CA stipulated in Rel. 13 is configured, when 3-bit A-CSI triggers are configured, when PUSCH is scheduled with a UL grant containing 3-bit A-CSI trigger. In this way, even if NDI is on, the conditions for employing the operation not to flush the HARQ process buffer are softened, and the same UE operation as in Rel. 8 to 12 can be implemented when CA specified in Rel. 8 or Rel. 10 to 12 is configured, so that it is possible to avoid unnecessarily increasing HARQ process retransmissions even when the UE is connected to an eNB having Rel. 8-12 functions.

### (Second Example)

In a second example, a case will be described in which whether to transmit A-CSI together with retransmission data is determined based on the number of PRBs allocated to the PUSCH and information on A-CSI. Hereinafter, a case where the number of CSI processes where transmission A-CSI is commanded is used as information on A-CSI will be described, but the present invention is not limited to this. For example, the number of serving cells commanded to transmit A-CSI or other information may be used.

In the second example, the user terminal receives a UL grant (DCI) including an A-CSI trigger (transmission command information), and, based on the A-CSI trigger, the user terminal controls the transmission of A-CSI using the PUSCH allocated by the UL grant. In addition, the user terminal determines whether or not to transmit (multiplex) A-CSI together with retransmission data based on the number of CSI processes (the number of processes) or the number of serving cells and the number of PRBs allocated to the PUSCH.

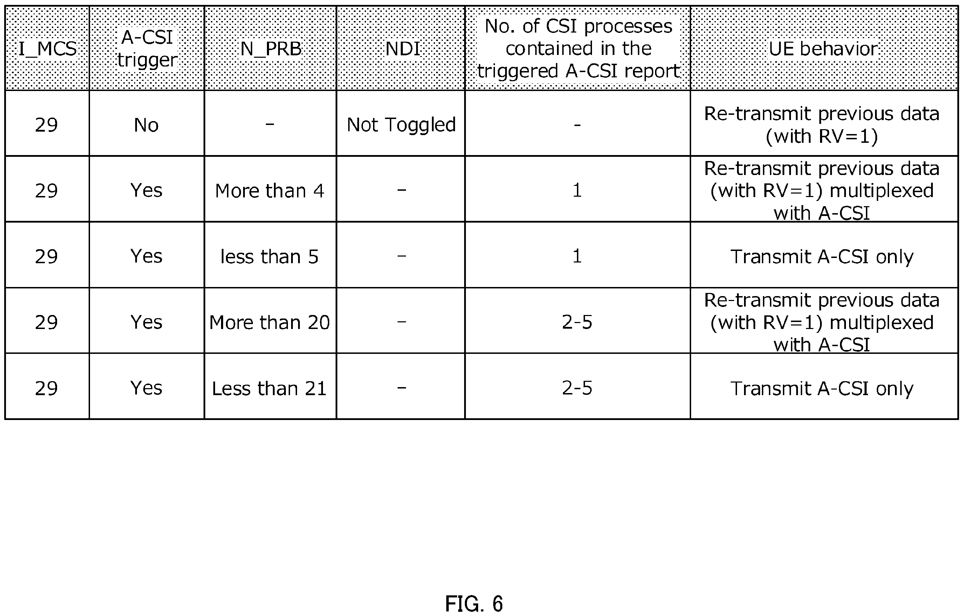

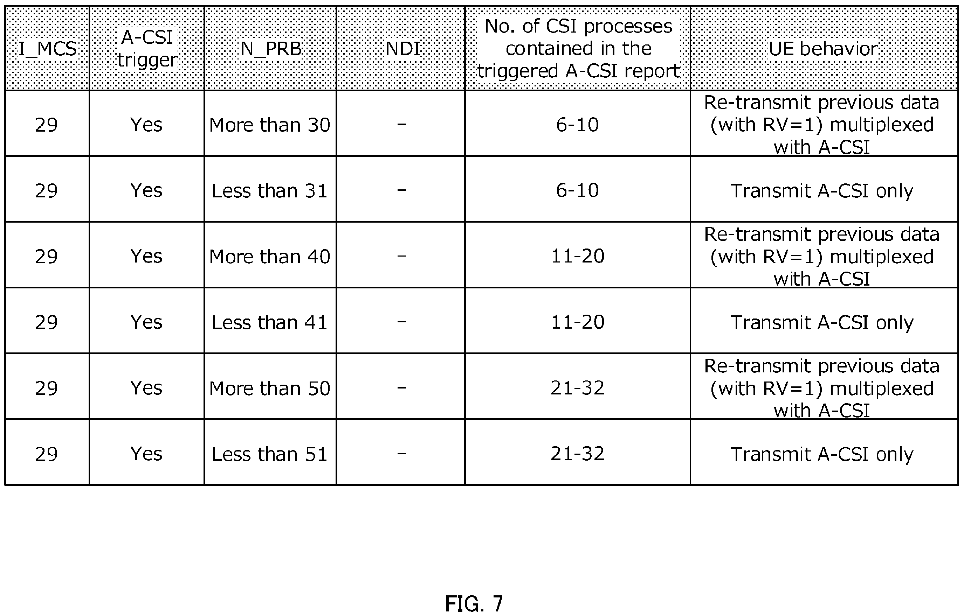

FIGs. 6 and 7 are diagrams showing examples of the operation of the user terminal using the number of CSI processes and the number of PRBs according to the second example. Since the operation of the user terminal when the MCS index (I_MCS) is "0" to "28" is the same as in FIG. 4, illustration thereof is omitted. Also, the CSI processes in FIGs. 6 and 7 and in the following description of the second example below may be replaced with serving cells.

As shown in FIGs. 6 and 7, when the MCS index (I_MCS) is "29" and transmission of A-CSI is commanded by the A-CSI trigger, based on the number of CSI processes where transmission is commanded by the A-CSI trigger and the number of PRBs allocated to the PUSCH (N_PRB), the user terminal determines whether to transmit (multiplex) A-CSI with retransmission data.

To be more specific, as shown in FIG. 6, when the MCS index (I_MCS) is "29," transmission of A-CSI is commanded by the A-CSI trigger and transmission of A-CSI of a single CSI process is commanded, the user terminal transmits(multiplexes) A-CSI of a single CSI process with retransmission data if the number of PRBs is larger than 4 (5 or more), or the user terminal transmits the A-CSI alone without transmitting (multiplexing) with retransmission data if the number of the PRBs is smaller than 5 (4 or less).

Further, as shown in FIG. 6, when the MCS index (I_MCS) is "29" and transmission of A-CSI is commanded by an A-CSI trigger and transmission of A-CSI of two to five CSI processes is commanded, if the number of PRBs is larger than 20 (21 or more), the user terminal transmits (multiplexes) A-CSI of 2 to 5 CSI processes with retransmission data, and, if the number of PRBs is smaller than 21 (below 20), the user terminal transmits A-CSI alone, without transmitting (multiplexing) with retransmission data.

Further, as shown in FIG. 7, when the MCS index (I_MCS) is "29" and the transmission of A-CSI is commanded by the A-CSI trigger and the transmission of A-CSI of 6 to 10 CSI processes is commanded, if the number of PRBs is greater than 30 (31 or more), the user terminal sends(multiplexes) A-CSI of 6 to 10 CSI processes with retransmission data, and, if the number of PRBs is smaller than 31 (30 or less), the user terminal transmits A-CSI alone, without transmitting (multiplexing) with retransmitted data.

Further, as shown in FIG. 7, when the MCS index (I_MCS) is "29" and the transmission of A-CSI is commanded by the A-CSI trigger, and the transmission of A-CSI of 11 to 20 CSI processes is commanded, when the number of PRBs is larger than 40 (41 or more), the user terminal transmits (multiplexes) A-CSI of 11 to 20 CSI processes together with retransmission data, and, when the number of PRBs is smaller than 41 (40 or less), the user terminal transmits the A-CSI alone without transmitting (multiplexing) with retransmitted data.

Further, as shown in FIG. 7, when the MCS index (I_MCS) is "29" and the transmission of A-CSI is commanded by the A-CSI trigger, and the transmission of A-CSI of 21 to 32 CSI processes is commanded, when the number of PRBs is larger than 50 (51 or more), the user terminal transmits (multiplexes) A-CSI of 21 to 32 CSI processes together with retransmission data, and, when the number of PRBs is smaller than 51 (50 or less), the user terminal transmits the A-CSI alone without transmitting (multiplexing) with retransmitted data.

Note that the number of CSI processes (that is, "1," is used to determine whether "5," is used to determine whether "10" and "20") and/or the thresholds for the number of PRBs (that is, "4," "20," "30," "40" and "50") shown in FIGs. 6 and 7 are merely examples, and are not limited to those shown in FIGs. 6 and 7. The thresholds for the number of PRBs may be values other than "4," "20," "30," "40" and "50," and their number needs not be five. Further, the thresholds for the number of CSI processes may be values other than "1," "5," "10," and "20," and their number needs not be four.

Further, in FIGs. 6 and 7, it is a condition for multiplexing A-CSI and retransmission data that the number of PRBs is larger than a predetermined threshold value, and it is a condition for transmitting A-CSI alone that the number of PRBs is equal to or less than a predetermined threshold value, these conditions are not limiting. It can be configured as a condition for multiplexing A-CSI and retransmission data that the number of PRBs is equal to or larger than a predetermined threshold value, and it can be used as a condition for transmitting A-CSI alone that the number of PRBs is smaller than the predetermined threshold.

According to the second example described above, whether or not A-CSI and retransmission data are multiplexed and transmitted is not only determined based on the number of PRBs but also on the number of CSI processes or the number of serving cells, and this makes it possible to prevent multiplexing of retransmission data from being restricted, even if the decision is made based on the number of PRBs as in existing systems.

### (Radio Communication System)

Now, the structure of the radio communication system according to the present embodiment will be described below. In this radio communication system, the radio communication methods according to embodiment of each enforcement are employed. Note that the radio communication methods of the above-described embodiments may be applied individually or may be applied in combination.

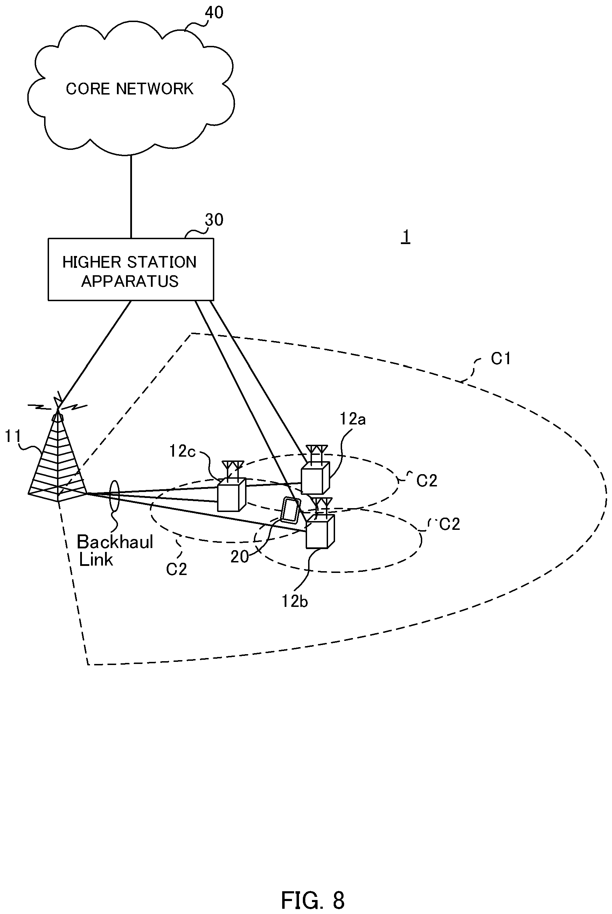

FIG. 8 is a diagram to show an example of a schematic structure of a radio communication system according to an embodiment of the present invention. The radio communication system 1 can adopt carrier aggregation (CA) and/or dual connectivity (DC) to group a plurality of fundamental frequency blocks (component carriers) into one, where the LTE system bandwidth (for example, 20 MHz) constitutes one unit. Note that the radio communication system 1 may be referred to as "SUPER 3G," "LTE-A" (LTE-Advanced), "IMT-Advanced," "4G," "5G," "FRA" (Future Radio Access) and so on.

The radio communication system 1 shown in FIG. 8 includes a radio base station 11 that forms a macro cell C1, and radio base stations 12a to 12c that form small cells C2, which are placed within the macro cell C1 and which are narrower than the macro cell C1. Also, user terminals 20 are placed in the macro cell C1 and in each small cell C2.

The user terminals 20 can connect with both the radio base station 11 and the radio base stations 12. The user terminals 20 may use the macro cell C1 and the small cells C2, which use different frequencies, at the same time, by means of CA or DC. Also, the user terminals 20 can execute CA or DC by using a plurality of cells (CCs) (for example, six or more CCs).

Between the user terminals 20 and the radio base station 11, communication can be carried out using a carrier of a relatively low frequency band (for example, 2 GHz) and a narrow bandwidth (referred to as, for example, an "existing carrier," a "legacy carrier" and so on). Meanwhile, between the user terminals 20 and the radio base stations 12, a carrier of a relatively high frequency band (for example, 3.5 GHz, 5 GHz and so on) and a wide bandwidth may be used, or the same carrier as that used in the radio base station 11 may be used. Note that the configuration of the frequency band for use in each radio base station is by no means limited to these.

A structure may be employed here in which wire connection (for example, means in compliance with the CPRI (Common Public Radio Interface) such as optical fiber, the X2 interface and so on) or wireless connection is established between the radio base station 11 and the radio base station 12 (or between two radio base stations 12).

The radio base station 11 and the radio base stations 12 are each connected with a higher station apparatus 30, and are connected with a core network 40 via the higher station apparatus 30. Note that the higher station apparatus 30 may be, for example, an access gateway apparatus, a radio network controller (RNC), a mobility management entity (MME) and so on, but is by no means limited to these. Also, each radio base station 12 may be connected with higher station apparatus 30 via the radio base station 11.

Note that the radio base station 11 is a radio base station having a relatively wide coverage, and may be referred to as a "macro base station," a "central node," an "eNB" (eNodeB), a "transmitting/receiving point" and so on. Also, the radio base stations 12 are radio base stations having local coverages, and may be referred to as "small base stations," "micro base stations," "pico base stations," "femto base stations," "HeNBs" (Home eNodeBs), "RRHs" (Remote Radio Heads), "transmitting/receiving points" and so on. Hereinafter the radio base stations 11 and 12 will be collectively referred to as "radio base stations 10," unless specified otherwise.

The user terminals 20 are terminals to support various communication schemes such as LTE, LTE-A and so on, and may be either mobile communication terminals or stationary communication terminals.

In the radio communication system 1, as radio access schemes, OFDMA (Orthogonal Frequency Division Multiple Access) is applied to the downlink, and SC-FDMA (Single-Carrier Frequency Division Multiple Access) is applied to the uplink. OFDMA is a multi-carrier communication scheme to perform communication by dividing a frequency bandwidth into a plurality of narrow frequency bandwidths (subcarriers) and mapping data to each subcarrier. SC-FDMA is a single-carrier communication scheme to mitigate interference between terminals by dividing the system bandwidth (CCs) into bands formed with one or continuous resource blocks per terminal, and allowing a plurality of terminals to use mutually different bands. Incidentally, the uplink and downlink radio access schemes are not limited to these combinations, and OFDMA may be applied in the uplink.

In the radio communication system 1, a downlink shared channel (PDSCH: Physical Downlink Shared CHannel), which is used by each user terminal 20 on a shared basis, a broadcast channel (PBCH: Physical Broadcast CHannel), downlink L1/L2 control channels and so on are used as downlink channels. User data, higher layer control information and predetermined SIBs (System Information Blocks) are communicated in the PDSCH. Also, the MIB (Master Information Blocks) is communicated in the PBCH.

The downlink L1/L2 control channels include a PDCCH (Physical Downlink Control CHannel), an EPDCCH (Enhanced Physical Downlink Control CHannel), a PCFICH (Physical Control Format Indicator CHannel), a PHICH (Physical Hybrid-ARQ Indicator CHannel) and so on. Downlink control information (DCI) including PDSCH scheduling information (DL Assignment) and/or PUSCH scheduling information (UL Grant) and the like are transmitted by the PDCCH. The number of OFDM symbols to use for the PDCCH is communicated by the PCFICH. HARQ delivery acknowledgement signals (ACKs/NACKs) in response to the PUSCH are communicated by the PHICH. The EPDCCH is frequency-division-multiplexed with the PDSCH (downlink shared channel) and used to communicate DCI and so on, like the PDCCH.

In the radio communication system 1, an uplink shared channel (PUSCH: Physical Uplink Shared CHannel), which is used by each user terminal 20 on a shared basis, an uplink control channel (PUCCH: Physical Uplink Control CHannel), a random access channel (PRACH: Physical Random Access CHannel) and so on are used as uplink channels. User data, high layer control information, and aperiodic channel state information (A-CSI) are transmitted by PUSCH. Uplink control information (UCI) including at least one of delivery acknowledgment information (ACK/NACK) and radio quality information (CQI), is communicated by the PUSCH or the PUCCH. By means of the PRACH, random access preambles for establishing connections with cells are communicated.

### <Radio base station>

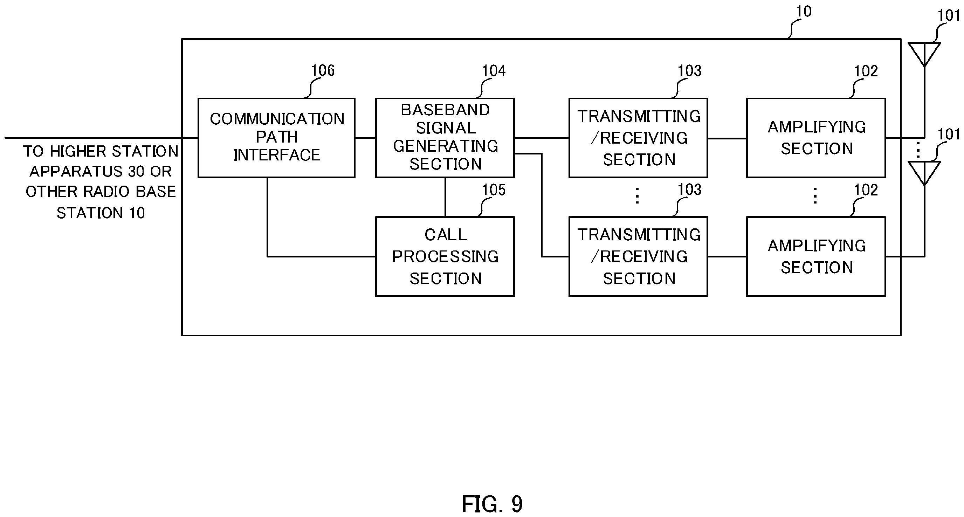

FIG. 9 is a diagram to show an example of an overall structure of a radio base station according to present embodiment. A radio base station 10 has a plurality of transmitting/receiving antennas 101, amplifying sections 102, transmitting/receiving sections 103, a baseband signal processing section 104, a call processing section 105 and a communication path interface 106. Note that one or more transmitting/receiving antennas 101, amplifying sections 102 and transmitting/receiving sections 103 may be provided.

User data to be transmitted from the radio base station 10 to a user terminal 20 on the downlink is input from the higher station apparatus 30 to the baseband signal processing section 104, via the communication path interface 106.

In the baseband signal processing section 104, the user data is subjected to a PDCP (Packet Data Convergence Protocol) layer process, user data division and coupling, RLC (Radio Link Control) layer transmission processes such as RLC retransmission control, MAC (Medium Access Control) retransmission control (for example, an HARQ (Hybrid Automatic Repeat reQuest) transmission process), scheduling, transport format selection, channel coding, an inverse fast Fourier transform (IFFT) process and a precoding process, and the result is forwarded to each transmitting/receiving section 103. Furthermore, downlink control signals are also subjected to transmission processes such as channel coding and an inverse fast Fourier transform, and forwarded to each transmitting/receiving section 103.

Baseband signals that are pre-coded and output from the baseband signal processing section 104 on a per antenna basis are converted into a radio frequency band in the transmitting/receiving sections 103, and then transmitted. The radio frequency signals having been subjected to frequency conversion in the transmitting/receiving sections 103 are amplified in the amplifying sections 102, and transmitted from the transmitting/receiving antennas 101.

Meanwhile, as for uplink signals, radio frequency signals that are received in the transmitting/receiving antennas 101 are each amplified in the amplifying sections 102. The transmitting/receiving sections 103 receive the uplink signals amplified in the amplifying sections 102. The received signals are converted into the baseband signal through frequency conversion in the transmitting/receiving sections 103 and output to the baseband signal processing section 104.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing such as setting up and releasing communication channels, manages the state of the radio base station 10 and manages the radio resources.

The communication path interface section 106 transmits and receives signals to and from the higher station apparatus 30 via a predetermined interface. Also, the communication path interface 106 may transmit and/or receive signals (backhaul signaling) with other radio base stations 10 via an inter-base station interface (for example, an interface in compliance with the CPRI (Common Public Radio Interface), such as optical fiber, the X2 interface, etc.).

Further, the transmitting/receiving sections 103 transmit DCI (for example, UL grant) including A-CSI triggers (transmission command information). In addition, the transmitting/receiving sections 103 receive the aperiodic channel state information (A-CSI) transmitted from the user terminal 20 based on the A-CSI trigger.

The transmitting/receiving sections 103 can be constituted by transmitters/receivers, transmitting/receiving circuits or transmitting/receiving devices that can be described based on common understanding of the technical field to which the present invention pertains. Note that a transmitting/receiving section 103 may be structured as a transmitting/receiving section in one entity, or may be constituted by a transmitting section and a receiving section.

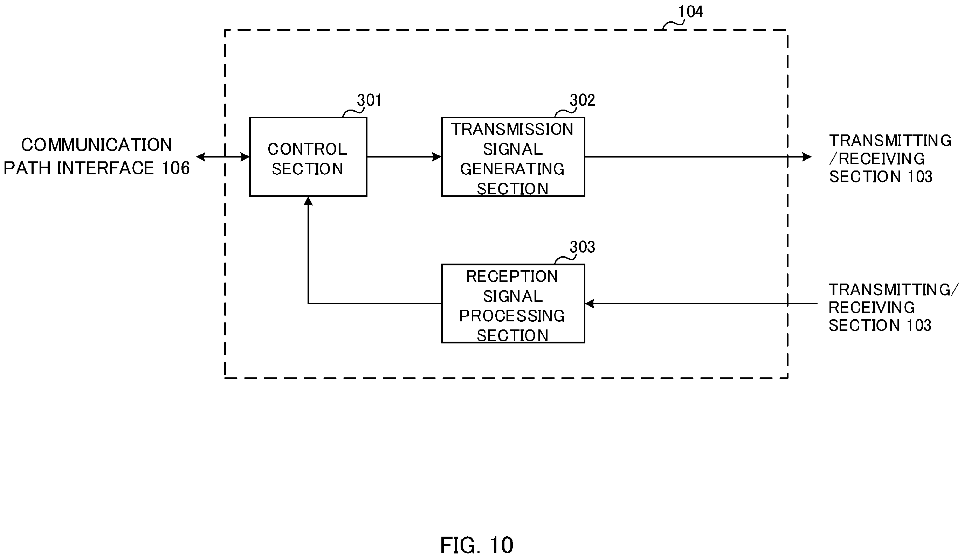

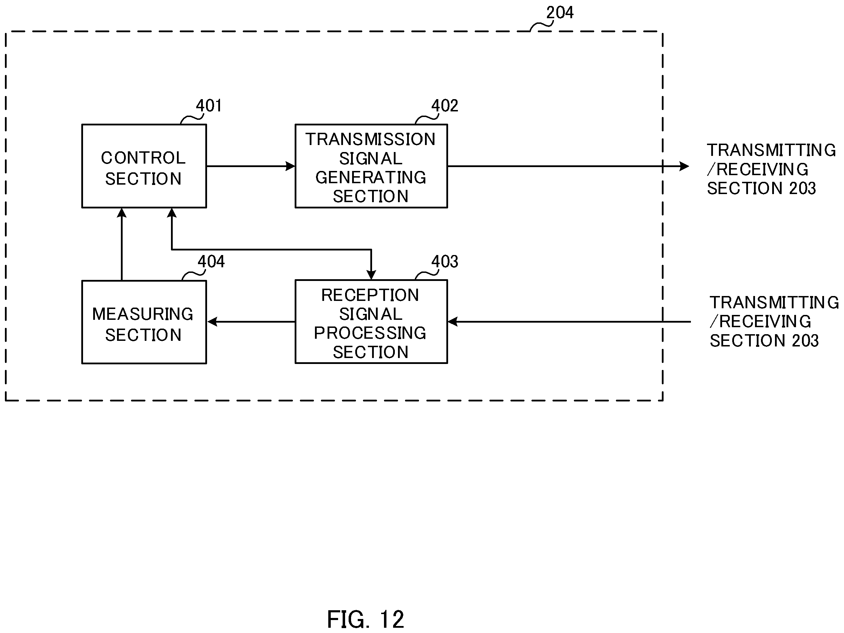

FIG. 10 is a diagram to show an example of a functional structure of a radio base station according to present embodiment. Note that, although FIG. 12 primarily shows functional blocks that pertain to characteristic parts of the present embodiment, the radio base station 10 has other functional blocks that are necessary for radio communication as well. As shown in FIG. 10, the baseband signal processing section 104 has a control section 301, a transmission signal generation section 302, and a received signal processing section 303.

The control section 301 controls the entire radio base station 10. The control section 301 controls, for example, generation of downlink signals by the transmission signal generation section 302 and the signal receiving process by the received signal processing section 303.

To be more specific, based on CSI reported from the user terminal 20 (periodic channel state information (P-CSI) and/or aperiodic channel state information (A-CSI)), the control section 301 performs downlink user data transmission control (for example, a modulation scheme, a coding rate, and the like), controls the allocation (scheduling) of a downlink shared channel (PDSCH) to the user terminal 20 and performs retransmission control based on delivery acknowledgment information (HARQ-ACK) from the user terminal 20.

In addition, the control section 301 performs reception control of uplink user data, allocation (scheduling) of an uplink shared channel (PUSCH) to the user terminal 20, transmission control of acknowledgment information (HARQ-ACK) for PUSCH, demodulation, decoding, etc.).

Furthermore, the control section 301 controls the carrier aggregation (CA) of the user terminal 20. To be more specific, the control section 301 may control the transmission signal generation section 302 to determine application of CA/changes in the number of CCs and so on, based on CSI or the like reported from the user terminals 20, and generate information to indicate such application/changes. Note that the information to indicate the application/changes may be included in control information sent by higher layer signaling.

The control section 301 can be constituted by a controller, a control circuit or a control device that can be described based on common understanding of the technical field to which the present invention pertains.

The transmission signal generation section 302 performs generation processing of downlink signals (including downlink data signals and downlink control signals) based on commands from the control section 301 (for example, addition of CRC bits, encoding, modulation, mapping, IFFT, multiplication of spread code, etc.).

To be more specific, the transmission signal generation section 302 generates a downlink data signal (PDSCH) including high layer control information, downlink user data, and the like, and outputs it to the transmitting/receiving sections 103. Further, the transmission signal generation section 302 generates a downlink control signal (PDCCH or/and EPDCCH) including the DCI and outputs the generated control signal to the transmitting/receiving sections 103. Furthermore, the transmission signal generation section 302 generates a downlink reference signal such as the CRS, the CSI-RS and so on, and outputs these signals to transmitting/receiving section 103.

For the transmission signal generation section 302, a signal generator, a signal generating circuit or a signal generating device that can be described based on common understanding of the technical field to which the present invention pertains can be used.

The received signal processing section 304 performs receiving processes (for example, demapping, demodulation, decoding and so on) of received signals that are input from the user terminals. The processing results are output to the control section 301. To be more specific, the received signal processing section 303 performs reception processing (mapping, demodulation, decoding, etc.) of CSI (P-CSI and/or A-CSI) included in the uplink data signal (PUSCH) and/or the uplink control signal (PUCCH).

The receiving process section 303 can be constituted by a signal processor, a signal processing circuit or a signal processing device, and a measurer, a measurement circuit or a measurement device that can be described based on common understanding of the technical field to which the present invention pertains.

### <User terminal>

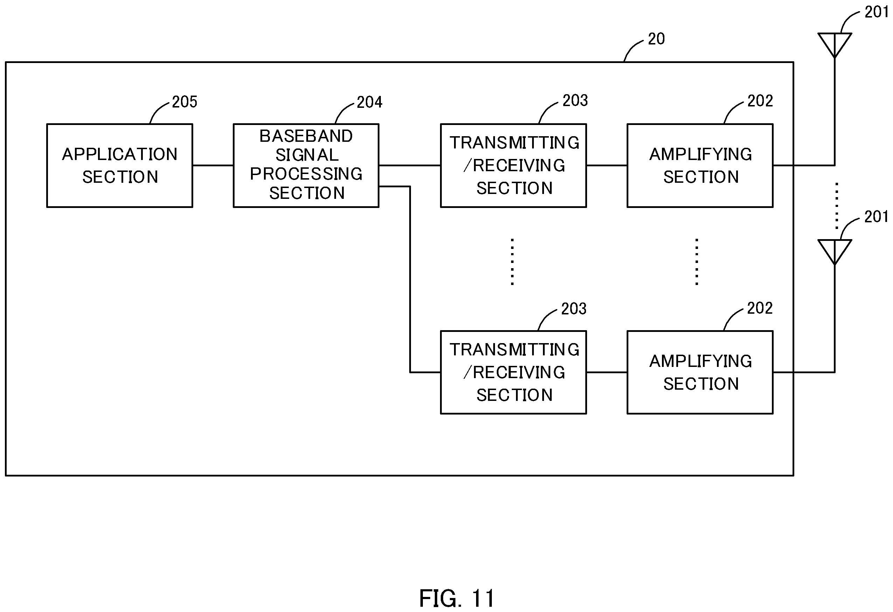

FIG. 11 is a diagram to show an example of an overall structure of a user terminal according to present embodiment. A user terminal 20 has a plurality of transmitting/receiving antennas 201 for MIMO communication, amplifying sections 202, transmitting/receiving sections 203, a baseband signal processing section 204 and an application section 205.

Radio frequency signals that are received in a plurality of transmitting/receiving antennas 201 are each amplified in the amplifying sections 202. Each transmitting/receiving section 203 receives the downlink signals amplified in the amplifying sections 202. The received signal is subjected to frequency conversion and converted into the baseband signal in the transmitting/receiving sections 203, and output to the baseband signal processing section 204.

In the baseband signal processing section 204, the baseband signal that is input is subjected to an FFT process, error correction decoding, a retransmission control receiving process, and so on. Downlink user data is forwarded to the application section 205. The application section 205 performs processes related to higher layers above the physical layer and the MAC layer, and so on. Furthermore, in the downlink data, broadcast information is also forwarded to the application section 205.

Meanwhile, uplink user data is input from the application section 205 to the baseband signal processing section 204. The baseband signal processing section 204 performs a retransmission control transmission process (for example, an HARQ transmission process), channel coding, pre-coding, a discrete Fourier transform (DFT) process, an IFFT process and so on, and the result is forwarded to each transmitting/receiving section 203. The baseband signal that is output from the baseband signal processing section 204 is converted into a radio frequency bandwidth in the transmitting/receiving sections 203. The radio frequency signals that are subjected to frequency conversion in the transmitting/receiving sections 203 are amplified in the amplifying sections 202, and transmitted from the transmitting/receiving antennas 201.

In addition, the transmitting/receiving section 203 receives DCI (for example, UL grant) including the A-CSI trigger (transmission command information). In addition, the transmitting/receiving section 203 transmits retransmission data of A-CSI and/or uplink data (UL-SCH) following commands from the control section 401 to be described later. Note that the transmitting/receiving section 203 may transmit the A-CSI and/or the retransmission data by using the PUSCH allocated by the DCI.

For the transmitting/receiving sections 203, transmitters/receivers, transmitting/receiving circuits or transmitting/receiving devices that can be described based on common understanding of the technical field to which the present invention pertains can be used. Furthermore, a transmitting/receiving section 203 may be structured as one transmitting/receiving section, or may be formed with a transmission section and a receiving section.

FIG. 12 is a diagram to show an example of a functional structure of a user terminal according to present embodiment. Note that, although FIG. 12 primarily shows functional blocks that pertain to characteristic parts of the present embodiment, the user terminal 20 has other functional blocks that are necessary for radio communication as well. As shown in FIG. 12, the baseband signal processing section 204 provided in the user terminal 20 has a control section 401, a transmission signal generation section 402, a received signal processing section 403 and a measurement section 404.

The control section 401 controls the whole of the user terminal 20. The control section 401 controls generation of a signal by the transmission signal generation section 402 and the signal receiving process by the received signal processing section 403, for example.

The control section 401 controls the transmission of A-CSI using the PUSCH allocated by the DCI based on the A-CSI trigger (transmission command information) included in DCI (for example, UL grant). To be more specific, the control section 401 determines whether or not to transmit (multiplex) A-CSI together with retransmission data based on the new data indicator (NDI) included in the DCI (the first example).

For example, when the index (for example, MCS index) included in the DCI is a specified value (for example, "29") and transmission of A-CSI is commanded by an A-CSI trigger, based on the NDI, the control section 401 may decide whether or not to transmit A-CSI together with retransmission data (FIG. 5).

In the above case, if NDI is set to off (not toggled), the control section 401 commands the transmission signal generation section 402 to transmit A-CSI with retransmission data. In this case, the control section 401 may command the transmission signal generation section 402 to apply the redundancy version (for example, "1") associated with the index to the retransmission data.

Also, in the above case, if NDI is set to on (toggled), the control section 401 commands the transmission signal generation section 402 to transmit only A-CSI without transmitting retransmission data. In this case, the control section 401 maintains (without flushing) the HARQ process buffer for retransmission data.

Further, when the index (for example, MCS index) included in the DCI is a specified value (for example, "29") and it is commanded not to transmit A-CSI by A-CSI trigger, the control section 401 may determine which of retransmission data and new data is to be transmitted based on the NDI.

Incidentally, (1) when six or more component carriers (CC) are set for the user terminal 20, (2) when the A-CSI trigger (transmission command information) is 3 bits and the A-CSI trigger is set in the user terminal 20, and (3) when the A-CSI trigger is 3 bits and the PUSCH is allocated to the user terminal 20 by the A-CSI trigger, the control section 401 may determine whether to transmit A-CSI with retransmission data based on the NDI, the control section 401 may decide whether or not to maintain the HARQ process buffer based on the NDI (flash).

Further, the control section 401 transmits the A-CSI together with the retransmission data based on the number of CSI processes where transmission A-CSI is commanded (or the number of serving cells) and the number of PRBs allocated to the PUSCH Or not (second example).

To be more specific, when the index (for example, MCS index) included in the DCI is a specified value (for example, "29"), the control section 401 may decide, based on a plurality of threshold values of the number of PRBs determined according to the number of CSI processes (or serving cells), whether or not to transmit A-CSI of the number of CSI processes (or the number of serving cells) together with retransmission data (FIGs. 6 and 7).

For example, as shown in FIG. 6, when transmission of A-CSI of one CSI process is commanded, the control section 401 determines whether or not to transmit A-CSI together with retransmission data, depending on whether the number of PRBs is larger than "4" or not. Also, when transmission of A-CSI of 2 to 5 CSI processes is commanded, the control section 401 determines whether to transmit A-CSI with retransmission data, depending on whether the number of PRBs is larger than "20" or not.

Further, as shown in FIG. 7, when transmission of A-CSI of 6 to 10 CSI processes is commanded, the control section 401 determines whether or not to transmit A-CSI together with retransmission data, depending on whether the number of PRBs is larger than "30" or not. In addition, when transmission of A-CSI of 11 to 20 CSI processes is commanded, the control section 401 determines whether or not to transmit A-CSI together with retransmission data, depending on whether the number of PRBs is larger than "40" or not. Also, when transmission of A-CSI of 21 to 32 CSI processes is commanded, the control section 401 determines whether or not to transmit A-CSI together with retransmission data, depending on whether or not the number of PRBs is larger than "50."

Further, the control section 401 controls carrier aggregation (CA). To be more specific, the control section 401 performs CA based on information indicating the application/change of CA from the radio base station 10.

For the control section 401, a controller, a control circuit or a control device that can be described based on common understanding of the technical field to which the present invention pertains can be used. Further, the control section 401 and a transmission signal generation section 402 to be described later constitute a control section of the present invention.

The transmission signal generation section 402 generates an uplink signal (including an uplink data signal and an uplink control signal) based on a command from the control section 401, and outputs the uplink signal to the transmitting/receiving section 203. For example, the transmission signal generation section 402 generates an uplink data signal (PUSCH) and/or an uplink control signal (PUCCH) including CSI (P-CSI and/or A-CSI).

Further, the transmission signal generation section 402 generates an uplink data signal (PUSCH) using a transport block size (TBS) determined based on the MCS index. In addition, the transmission signal generation section 402 performs rate matching of the uplink data signal (PUSCH) using the redundancy version associated with the MCS index. Further, the transmission signal generation section 402 modulates the uplink data signal (PUSCH) using the modulation scheme of modulation order determined based on the MCS index.

For the transmission signal generation section 402, a signal generator, a signal generating circuit or a signal generating device that can be described based on common understanding of the technical field to which the present invention pertains can be used. The transmission signal generation section 402 and the control section 401 can constitute a control section according to the present invention.

The received signal processing section 403 performs reception processing (for example, demapping, demodulation, decoding, etc.) on downlink signals (including downlink control signals and downlink data signals). The received signal processing section 403 outputs the information received from the radio base station 10, to the control section 401. The received signal processing section 403 outputs, for example, broadcast information, system information, high layer control information such as RRC signaling, DCI, and the like, to the control section 401.

The received signal processing section 403 can be constituted by a signal processor, a signal processing circuit or a signal processing device that can be described based on common understanding of the technical field to which the present invention pertains. The received signal processing section 403 and the transmitting/receiving section 203 can constitute the receiving section according to the present invention.

The measurement section 404 measures channel states based on reference signals (for example, CSI-RS) from the radio base station 10, and outputs the measurement results to the control section 401. Measurement of the channel state may be performed for each CC.

The measurement section 404 can be constituted by a signal processor, a signal processing circuit or a signal processing device, and a measurer, a measurement circuit or a measurement device that can be described based on common understanding of the technical field to which the present invention pertains.

### <Hardware structure>

Note that the block diagrams that have been used to describe the above embodiments show blocks in functional units. These functional blocks (components) may be implemented in arbitrary combinations of hardware and/or software. Also, the means for implementing each functional block is not particularly limited. That is, each functional block may be implemented with one physically-integrated device, or may be implemented by connecting two physically-separate devices via radio or wire and using these multiple devices.

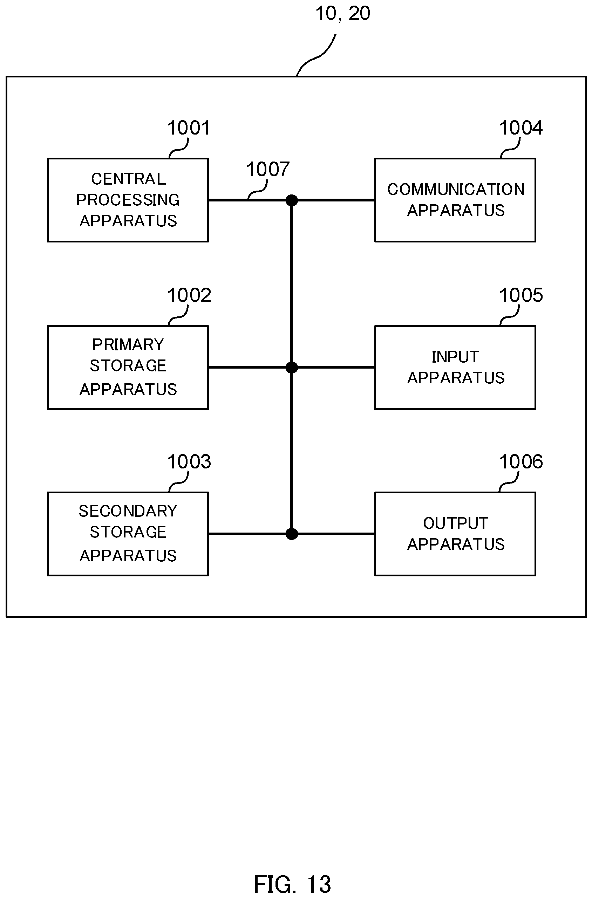

That is, a radio base station, a user terminal and so on according to an embodiment of the present invention may function as a computer that executes the processes of the radio communication method of the present invention. FIG. 13 is a diagram to show an example hardware structure of a radio base station and a user terminal according to the present embodiment. Physically, a radio base station 10 and a user terminal 20, which have been described above, may be formed as a computer apparatus that includes a central processing apparatus (processor) 1001, a primary storage apparatus (memory) 1002, a secondary storage apparatus 1003, a communication apparatus 1004, an input apparatus 1005, an output apparatus 1006 and a bus 1007. Note that, in the following description, the word "apparatus" may be replaced by "circuit," "device," "unit" and so on.

Each function of the radio base station 10 and user terminal 20 is implemented by reading predetermined software (programs) on hardware such as the central processing apparatus 1001, the primary storage apparatus 1002 and so on, and controlling the calculations in the central processing apparatus 1001, the communication in the communication apparatus 1004, and the reading and/or writing of data in the primary storage apparatus 1002 and the secondary storage apparatus 1003.

The central processing apparatus 1001 may control the whole computer by, for example, running an operating system. The central processing apparatus 1001 may be formed with a processor (CPU: Central Processing Unit) that includes a control apparatus, a calculation apparatus, a register, interfaces with peripheral apparatus, and so on. For example, the above-described baseband signal process section 104 (204), call processing section 105 and so on may be implemented by the central processing apparatus 1001.

Also, the central processing apparatus 1001 reads programs, software modules, data and so on from the secondary storage apparatus 1003 and/or the communication apparatus 1004, into the primary storage apparatus 1002, and executes various processes in accordance with these. As for the programs, programs to allow the computer to execute at least part of the operations of the above-described embodiments may be used. For example, the control section 401 of the user terminal 20 may be stored in the primary storage apparatus 1002 and implemented by a control program that runs on the central processing apparatus 1001, and other functional blocks may be implemented likewise.

The primary storage apparatus (memory) 1002 is a computer-readable recording medium, and may be constituted by, for example, at least one of a ROM (Read Only Memory), an EPROM (Erasable Programmable ROM), a RAM (Random Access Memory) and so on. The secondary storage apparatus 1003 is a computer-readable recording medium, and may be constituted by, for example, at least one of a flexible disk, an opto-magnetic disk, a CD-ROM (Compact Disc ROM), a hard disk drive and so on.

The communication apparatus 1004 is hardware (transmitting/receiving device) for allowing inter-computer communication by using wired and/or wireless networks, and may be referred to as, for example, a "network device," a "network controller," a "network card," a "communication module" and so on. For example, the above-described transmitting/receiving antennas 101 (201), amplifying sections 102 (202), transmitting/receiving sections 103 (203), communication path interface 106 and so on may be implemented by the communication apparatus 1004.

The input apparatus 1005 is an input device for receiving input from the outside (for example, a keyboard, a mouse, etc.). The output apparatus 1006 is an output device for allowing sending output to the outside (for example, a display, a speaker, etc.). Note that the input apparatus 1005 and the output apparatus 1006 may be provided in an integrated structure (for example, a touch panel).

Also, the apparatuses, including the central processing apparatus 1001, the primary storage apparatus 1002 and so on, may be connected via a bus 1007 to communicate information with each other. The bus 1007 may be formed with a single bus, or may be formed with buses that vary between the apparatuses. Note that the hardware structure of the radio base station 10 and the user terminal 20 may be designed to include one or more of each apparatus shown in the drawings, or may be designed not to include part of the apparatuses.

For example, the radio base station 10 and the user terminal 20 may be structured to include hardware such as an ASIC (Application-Specific Integrated Circuit), a PLD (Programmable Logic Device), an FPGA (Field Programmable Gate Array) and so on, and part or all of the functional blocks may be implemented by the hardware.

Note that the terminology used in this description and the terminology that is needed to understand this description may be replaced by other terms that convey the same or similar meanings. For example, "channels" and/or "symbols" may be replaced by "signals" (or "signaling"). Also, "signals" may be "messages." Furthermore, "component carriers" (CCs) may be referred to as "cells," "frequency carriers," "carrier frequencies" and so on.

Also, the information and parameters described in this description may be represented in absolute values or in relative values with respect to a predetermined value, or may be represented in other information formats. For example, radio resources may be specified by predetermined indices.

The information, signals and/or others described in this description may be represented by using a variety of different technologies. For example, data, instructions, commands, information, signals, bits, symbols and chips, all of which may be referenced throughout the description, may be represented by voltages, currents, electromagnetic waves, magnetic fields or particles, optical fields or photons, or any combination of these.

Also, software and commands may be transmitted and received via communication media. For example, when software is transmitted from a website, a server or other remote sources by using wired technologies (coaxial cables, optical fiber cables, twisted-pair cables, digital subscriber lines (DSL) and so on) and/or wireless technologies (infrared radiation and microwaves), these wired technologies and/or wireless technologies are also included in the definition of communication media.

The examples/embodiments illustrated in this description may be used individually or in combinations, and may be switched depending on the implementation. Also, a report of predetermined information (for example, a report to the effect that "X holds") does not necessarily have to be sent explicitly, and can be sent implicitly (by, for example, not reporting this piece of information).

Reporting of information is by no means limited to the example s/embodiments described in this description, and other methods may be used as well. For example, reporting of information may be implemented by using physical layer signaling (for example, DCI (Downlink Control Information) and UCI (Uplink Control Information)), higher layer signaling (for example, RRC (Radio Resource Control) signaling, broadcast information (the MIB (Master Information Block) and SIBs (System Information Blocks)) and MAC (Medium Access Control) signaling and so on), other signals or combinations of these. Also, RRC signaling may be referred to as "RRC messages," and can be, for example, an RRC connection setup message, RRC connection reconfiguration message, and so on.

The examples/embodiments illustrated in this description may be applied to LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), and other adequate systems, and/or next-generation systems that are enhanced based on these.

The order of processes, sequences, flowcharts and so on that have been used to describe the examples/embodiments herein may be re-ordered as long as inconsistencies do not arise. For example, although various methods have been illustrated in this description with various components of steps in exemplary orders, the specific orders that illustrated herein are by no means limiting.

Now, although the present invention has been described in detail above, it should be obvious to a person skilled in the art that the present invention is by no means limited to the embodiments described herein. For example, the above-described embodiments may be used individually or in combinations. The present invention can be implemented with various corrections and in various modifications, without departing from the spirit and scope of the present invention defined by the recitations of claims. Consequently, the description herein is provided only for the purpose of explaining example s, and should by no means be construed to limit the present invention in any way.

The disclosure of Japanese Patent Application No. 2015-217101, filed on November 4, 2015, including the specification, drawings and abstract, is incorporated herein by reference in its entirety.

## Claims

1. A user terminal comprising:
a receiving section that receives downlink control information including transmission command information of aperiodic channel state information; and
a control section that controls transmission of the aperiodic channel state information using an uplink shared channel allocated by the downlink control information, based on the transmission command information,
wherein, when an index included in the downlink control information is a specified value and transmission of the aperiodic channel state information is commanded by the transmission command information, the control section determines whether to transmit the aperiodic channel state information with retransmission data based on a new data identifier (NDI) included in the downlink control information.

2. The user terminal according to claim 1, wherein, when the NDI is set to on, the control section transmits the non-periodic channel state information without transmitting the retransmission data.

3. The user terminal according to claim 2, wherein the control section maintains an HARQ (Hybrid Automatic Repeat-Request) process buffer for the retransmission data.

4. The user terminal according to claim 1, wherein, when the NDI is set to off, the control section transmits the aperiodic channel state information with the retransmission data.

5. The user terminal according to claim 4, wherein the control section applies a redundancy version associated with the index to the retransmission data.

6. The user terminal according to one of claims 1 to 5, wherein, when the index included in the downlink control information is a specified value and the transmission command information commands not to transmit the aperiodic channel state information, the control section determines which one of the retransmission data and the new data is transmitted, based on the NDI.

7. The user terminal according to one of claims 1 to 6, wherein the operation of the control section is applied when six or more component carriers are configured in the user terminal, when the transmission command information is three bits and the transmission command information is configured in the user terminal, or when the transmission command information is three bits and the uplink shared channel is allocated to the user terminal according to the transmission command information.

8. A user terminal comprising:
a receiving section that receives downlink control information including transmission command information of aperiodic channel state information; and
a control section that controls transmission of the aperiodic channel state information using an uplink shared channel allocated by the downlink control information, based on the transmission command information,
wherein, when the index included in the downlink control information is a specified value and transmission of the aperiodic channel state information is commanded by the transmission command information, the control section determines whether to transmit the aperiodic channel state information together with the retransmission data based on the number of processes of the aperiodic channel state information or the number of serving cells, and the number of resource blocks allocated to the uplink shared channel.

9. A radio base station comprising:
a transmission section that transmits downlink control information including transmission command information of aperiodic channel state information; and
a receiving section that receives aperiodic channel state information transmitted from the user terminal by using the uplink shared channel allocated by the downlink control information based on the transmission command information,
wherein the downlink control information includes a new data identifier (NDI) that is used to determine whether to transmit the aperiodic channel state information together with retransmission data when the index included in the downlink control information is a specified value and transmission of the aperiodic channel state information is commanded by the transmission command information.

10. A radio communication method between a user terminal and a radio base station, the radio communication method comprising, in the user terminals, the steps of:
receiving downlink control information including transmission command information of aperiodic channel state information;
transmitting of the aperiodic channel state information using an uplink shared channel allocated by the downlink control information, based on the transmission command information; and
when an index included in the downlink control information is a specified value and transmission of the aperiodic channel state information is commanded by the transmission command information, determining whether to transmit the aperiodic channel state information with retransmission data based on a new data identifier (NDI) included in the downlink control information.
